# EUROPEAN PATENT APPLICATION

(11) **EP 2 159 749 A1**
(43) Date of publication of application: **03.03.2010**
(21) Application number: 08290789.0
(22) Date of filing: 20.08.2008
(51) Int. Cl.: G06Q 50/00

(54) **Method of controlling a power grid**

(71) Applicant: Alcatel Lucent, 75008 Paris (FR)
(72) Inventor: Kopp, Dieter Dipl.-Ing., 75428 Illingen (DE); Wagner, Janosch, 97486 Königsberg (DE); Stocker, Klaus Dr., 70567 Stuttgart (DE); Johnson, Peter (BSc), HP180HX Aylesbury (GB)
(74) Representative: Zinsinger, Norbert

(57) **Abstract**

The invention concerns a method of controlling a power grid and a control server. The control server (4) comprises communication means (41), a data base (43) and a control unit (42) adapted to execute the method of controlling a power grid. The control server (4) receives information about utilities energy data from a utilities provider (5). The control server (4) receives information about consumer energy data from a plurality of smart-meters (21, 22). The control server (4) performs a load balancing evaluation based on the received information about utilities energy data and on the received information about consumer energy data. The control server (4) generates consumer energy information based on results of the load balancing evaluation and on energy management data associated with a respective consumer (61, 62) and extracted from a data base (43) and sends the generated consumer energy information to a user device (3) and/or a smart-meter (21, 22), wherein the user device (3) is associated with the smart-meter (21, 22).

## Description

The present invention relates to a method of controlling a power grid and to a control server for executing the method of controlling a power grid,

Nowadays, metering devices for metering of energy are an essential part of a power grid. The metering devices are located at the consumer's side, e.g. in private households. The power grid connects the energy consuming and energy generating devices of a respective unit, for instance a private household, with the utilities of a utilities provider, for instance a power plant. The power grid is the "backbone" of the infrastructure of provision of energy. The demands on the power grid are increasing rapidly with the permanently increasing need for energy. An overload of the power grid can cause partial or total blackouts. Since power plants are not able to adapt their energy production instantaneously to rapid changes of demand of energy, a temporary overproduction of energy by the utilities is also not desirable. Furthermore, the utilities provider uses the measured metering data for bill purposes, but the metering data measured by the metering devices is not directly available to the utilities provider. The problems slightly ripped above indicate that power grids of utilities provider are not efficiently used.

The object of the present invention is to improve the efficiency of a power grid.

The object of the present invention is achieved by a method of controlling a power grid, wherein a control server receives information about utilities energy data from a utilities provider, the control server receives information about consumer energy data from a plurality of smart-meters, the control server performs a load balancing evaluation based on the received information about utilities energy data and on the received information about consumer energy data, the control server generates consumer energy information based on results of the load balancing evaluation and on energy management data associated with a respective consumer and extracted from a data base, and the control server sends the generated consumer energy information to a user device and/or a smart-meter, wherein the user device is associated with the smart-meter. The object of the present invention is also achieved by a control server comprising communication means, a data base and a control unit adapted to receive information about utilities energy data from a utilities provider, receive information about consumer energy data from a plurality of smart-meters, perform a load balancing evaluation based on the received information about utilities energy data and on the received information about consumer energy data, generate consumer energy information based on results of the load balancing evaluation and on energy management data associated with a respective consumer and extracted from a data base, and send the generated consumer energy information to a user device and/or a smart-meter, wherein the user device is associated with the smart-meter.

The present invention provides an improved efficiency of a power grid associated with the utilities provider by means of offering a user or customer consumer energy information which is based on the results of a load balancing evaluation and on the energy management data, wherein, preferably, the consumer energy information prefers an equal load on the power grid at every time. The user or customer is able to efficiently decide the consumers associated with the user to consume or to produce energy to the advantage of the user or customer. Therefore, in an indirect way load balancing of the power grid is triggered, which consequently improves the stability and reliability of the power grid and minimizes unnecessary excess of energy produced by the utilities provider due to their relative low reaction time on changes in energy consumption from the power grid. Moreover, by means of the control server all necessary data to perform the load balancing evaluation is centrally stored at the data base of the control server and thereby, the data is easily accessible.

Further advantages are achieved by embodiments of the invention indicated by the dependent claims.

According to a preferred embodiment, the control server updates the data base according to the received consumer energy data and received utilities energy data. The data base comprises a consumption chart, a utilities provider energy production chart, a utilities provider energy distribution chart, and a consumer tariff chart. Preferably, the consumption chart is for the consumer associated with the smart-meter and/or the smart-meter.

Preferably, the data base is divided into two data bases. However, it is also possible that the two data bases are logical data bases which are physically provided by the data base which is a single data base. One of the two data bases holds the consumer related data, e.g. a consumer tariff chart, a consumer profile, consumer accounting information, and/or energy management data. It is possible that the consumer profile comprises a priority and/or a tariff interval. The consumer tariff can be time dependent. The priority associated with the consumer allows to control the consumer by the control server. That means to allow or deny the production or consumption of energy depending on the results of the load balancing evaluation controlled by the control server. Furthermore, it is possible by means of the tariff interval to select an optimal tariff for the consumer, i.e. a minimal tariff for energy consuming consumers and a maximal tariff for energy producing consumers. Therefore, the control server can selectively control consumers, e.g. switch on or off, in order to optimize the load management of the power grid based on the results of the load balancing evaluation. The other one of the two data bases holds utilities provider related data, e.g. a utilities provider energy production chart, a utilities provider energy distribution chart, utilities provider tariff charts, and/or a topology of the power grid associated with the utilities provider. The utilities provider energy distribution chart in combination with the topology of the power grid defines a time dependent distribution and/or routing of power and/or energy in and/or through the power grid. Preferably, all of the charts above, i.e. the consumer tariff chart, the utilities provider energy production chart, the utilities provider energy distribution chart and/or utilities provider tariff charts are time dependent charts. In particular, a utilities provider tariff may also be time dependent.

Furthermore, it is also possible that the utilities provider tariff chart allows the control server to select tariffs in an tariff interval predetermined by the utilities provider, such that the control server is also able to optimize, in particular maximize, a profit of the utilities provider, and thereby it is possible to minimize an excess of energy produced and routed through the power grid by the utilities provider.

According to a preferred embodiment, an updated consumer tariff chart and/or consumer tariff information is generated as consumer energy information. The consumer energy information offers a low tariff for periods with high energy excess in the power grid associated with the utilities provider and a high tariff for periods with energy shortage in the power grid based on data of the data base to a user associated with the respective consumer.

According to a preferred embodiment, the control server provides a graphical user interface. Preferably, the graphical user interface is accessible by means of an Internet web-browser. The control server is accessed by means of the graphical user interface via the user device. Preferably, the user device is a personal computer, a personal digital assistant or a smart phone. The access to the control server can be granted upon successful authentication via the graphical user interface. The control server provides consumer energy information via the graphical user interface. The data base holds consumer profile data associated with the respective consumer. The consumer profile data is created, deleted or modified via the graphical user interface. Preferably, the consumer profile data comprises schedule and/or control instructions assigned to the respective consumer with time information and priority information. It is further possible to control instantaneously the respective consumer or the user device, e.g. controlling the respective consumer or the user device or e.g. switching the respective consumer or the user device on or off. In case of controlling the respective consumer or the user device, it is possible to reduce the amount of energy consumed by the respective consumer or the user device. Furthermore, by means of the priority information the control server is able to weight the importance of consumers and control the consumers in accordance to their associated priority and thereby, preferably, minimize the charge of the user associated with the respective consumer and maximize the profit of the utilities provider at the same time,

According to a preferred embodiment, the smart-meter receives the generated consumer energy information. The smart-meter extracts from the consumer energy information schedule instructions and/or control instructions assigned to the respective consumer with time information and priority information. The smart-meter controls the consumer according to the extracted schedule instructions and/or control instructions. Preferably, the smart-meter extracts schedule and/or control instructions assigned to a respective consumer with time information and priority information.

According to a preferred embodiment, the control server generates utilities provider information based on the results of the load balancing evaluation and/or on the extracted energy management data. Preferably, the extracted energy management data comprises consumption chart and/or schedule information associated with a consumer associated with the smart-meter and/or with the smart-meter. The control server sends the generated utilities provider information to the utilities provider. The utilities provider receives the generated utilities provider information. The utilities provider adapts an amount of energy provided on schedule and routed on schedule through the power grid to consumers according to the received utilities provider information.

It is possible that the utilities provider updates a utilities provider tariff chart based on the received utilities provider information. The utilities provider sends the updated utilities provider tariff chart as part of the utilities energy data to the control server. The control server sends an updated consumer tariff chart based on the updated utilities provider tariff chart as part of the consumer energy information to the user device, preferably by means of an e-mail service or a short message service.

Preferably, the user device associated with a consumer and/or the smart-meter receives the generated consumer energy information. Preferably, the user device having a display is a personal computer, a personal digital assistant or a smart phone. It is also possible that the control server provides graphical user interface. The graphical user interface can be accessed by means of an Internet web-browser via the user device. The display of the user device displays the generated consumer energy information.

According to a preferred embodiment, the control server receives an alert message indicating a supply shortage, an emergency call, and/or a malfunction of an appliance from a smart-meter. The control server forwards the alert message to a supplier, an emergency center, and/or maintenance provider or manufacturer of the appliance, respectively.

According to a preferred embodiment, the utilities energy data is received periodically, preferably every 10 minutes to 20 minutes. A preferred period of time for receiving utilities energy data has 15 min. The utilities energy data comprises an amount of energy presently produced and/or available, energy pricing information, energy transport or routing information. The consumer energy data is received periodically, preferably every 10 minutes to 20 minutes. A preferred period of time for receiving consumer energy data has 15 min. The consumer energy data comprises an amount of energy presently produced and/or consumed by a consumer associated with the smart-meter. It is possible that period of time for receiving consumer energy data and utilities energy data are equal.

According to a preferred embodiment, the information sent from, received by and/or exchanged between the control server, the utilities provider, the smart-meter, and/or the user device is encoded by means of a generic protocol. Preferably, the generic protocol is an extensible markup language above an hypertext transfer protocol, a simple object access protocol, or an IP-packed based communication protocol,

Preferably, the consumer is either an energy consuming device, for instance a lamp, a television set, a computer, a stereo, an electric stove, a dishwasher, a boiler, a refrigerator, an air-conditioning system, a microwave stove or a washing machine, or it is an energy producing device, for instance a solar-powered plant, a windmill-powered plant, or a water-powered plant. These consumers are connected to and controlled by an associated smart-meter.

It is possible that the user device and/or the consumer is a device of a Home Automation System, which is controlled by the control server. A device of the Home Automation is for instance a lamp, a television set, a computer, a stereo, an electric stove, a dishwasher, a boiler, a refrigerator, an air-conditioning system, a microwave stove, a washing machine, electrical cars or a security device. Preferably, a security device is an alarm, a smoke detector, a central locking system or a sprinkler fire-extinguishing installation. The device of the Home Automation System can also be a monitor of a supply storage, which triggers the refilling of the supply storage by a respective supplier via the control server. For instance the supply storage is used for storing coal, oil, gas, water or food data.

Preferably, the control server controls the user device according to a respective profile stored in the data base if the user device is a device of a Home Automation System. It is possible to modify and/or remote control the profile of a user device associated with the Home Automation System and/or to remote control, preferably instantaneously, this user device via a graphical user interface provided by the control server.

Furthermore, it is possible to provide control boxes comprising communication means. The control box provides the functionality of routing the communication between the plurality of smart-meters and the control server. Preferably, the smart-meters communicate with the control box by means of short-range wire or wireless communication techniques, e.g. blue-tooth, infra-red, power line communication, wireless local area network, local area network, Metering-Bus and/or Zig-Bee. The control box can communicate with the control server by means of long-range wire or wireless communication techniques, e.g. digital subscriber line, wire or wireless telephone communication techniques, General Packet Radio Service, Universal Mobile Telecommunications System, and/or Worldwide Interoperability for Microwave Access.

These features as well as further features and advantages of the invention will be better appreciated by reading the following detailed description of presently preferred exemplary embodiments taken with the accompanying drawing of which
- Figure 1: shows a diagram of plurality of consumers which consume from or produce energy in a power grid,
- Figure 2: shows a consumption chart, wherein the consumption of energy is displayed in a.u. (a.u. = arbitrary units) for each hour of one day.

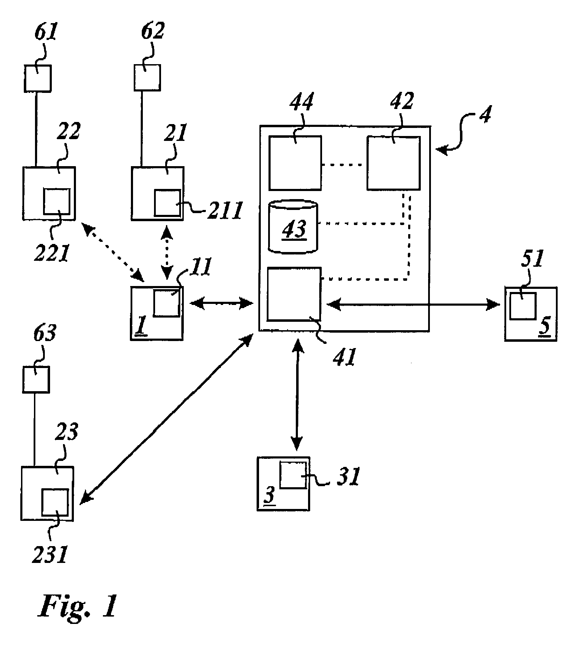

Figure 1 shows a control server 4 in a power grid infrastructure. The power grid infra structure comprises a power grid (not shown), consumers 61, 62 and 63 connected to smart meters 21, 22 and 23, respectively, a control box 1, a user device 3 and a utility provider 5. The control box 1 provides the functionality of routing data between the smart-meters 21 and 22 and the control server 4. The consumers 61 and 62 are connected to the smart-meters 21 and 22, respectively.

The control server 4 comprises communication means 41, a control unit 42 adapted to execute the method of controlling the power grid, a data base 43 and a graphical user interface 44. The communication means 41, the control unit 42, the data base 43 and the graphical user interface 44 are connected to each other indicated by the dashed line. The control server 4 provides the functionality of an Internet web-server.

The smart-meters 21, 22 and 23 are connected electronically to the consumers 61, 62 and 63, respectively. The smart-meters 21, 22 and 23 measure an amount of energy consumed or produced by the consumers 61, 62, and 63, respectively. The smart-meters 21, 22 and 23 can send the measured amount of energy and thereto related further information to the control server 4 by means of the communication means 211, 221 and 223, respectively. It is possible that the smart-meters 21, 22 and 23 can control the consumers 61, 62 and 63, respectively. In particular, the smart-meters 21, 22 and 23 can switch-on or switch-off the consumers 61, 62 and 63, respectively. Furthermore, the smart-meters 21, 22 and 23 can reduce the amount of energy consumed from the power grid or produced for inputting it in the power grid.

The control box 1 comprises communication means 11 for communicating via an IP protocol stack. It is possible that the smart-meters communicate with one another by means of one or more proprietary communication protocols. In such a case, the control box 1 provides a conversion between the one or more proprietary communication protocols and generic IP protocols used for communicating with the control server 4 via the Internet or another generic communication network.

The control box 1, the smart-meter 21, 22, 23, the user device 3, the control server 4 and the utilities provider 5 comprise communication means 11, 211, 221, 231, 31, 41 and 51, respectively. The communication means 11, 211, 221, 231, 31, 41 and 51 provide communication functionality to the control box 1, the smart-meter 21, 22, 23, the user device 3, the control server 4 and the utilities provider 5, respectively. The communication means 11, 211, 221, 231, 31, 41 and 51 communicate via an IP stack protocol. Dashed arrows indicate communication by means of short-range wire or wireless communication techniques. Plain arrows indicate communication by means of long-range wire or wireless communication techniques. In Figure 1 the control box 1 communicates with the smart-meter 21 and 21 by means of short-range wire or wireless communication techniques, whereas the control box 1, the smart-meter 23, the user device 3 and the utilities provider 5 communicate, preferably via the Internet, with the control server 4 by means of long-range wire or wireless communication techniques. The underlying communication network infrastructure (not shown) provides an IP infrastructure for communicating. The underlying communication network infrastructure provides the sending and receiving of e-mails, accessing the world wide web or Internet by means of Internet web-browsers and supports a hypertext transfer protocol.

The control server 4 collects or receives information about utilities energy data from the utilities provider 5 by means of the communication means 41. The control server 4 collects or receives information about consumer energy data from the plurality of smart-meters 21, 22, 23 by means of communication means 41. The control server 4 performs a load balancing evaluation based on the received information about consumer energy data from a plurality of smart-meters 21, 22 and 23 and on the received information about utilities energy data from the utilities provider 5 by means of the control unit 42. The control server 4 generates consumer energy information and preferably, utilities provider information based on results of the load balancing evaluation and based on energy management data associated with the respective consumer 61, 62 or 63 and extracted from the data base 43 by means of the control unit 42. The control server 4 sends the generated consumer energy information to the user device 3 and/or the smart-meter 21, 22 and/or 23. The user device 3 is associated with the smart-meter 21, 22 and/or 23. The control server 4 sends the generated consumer energy information to the utilities provider 5. Thus, the utilities provider 5, the smart-meters 21, 22, 23 and the user device 3 and the control server 4 have all necessary information in order to load balance the power grid by means of switching on or off of the consumers 61, 62, 63 and/or the user device 3.

Preferably, the information and/or data exchanged between the control box 1, the smart-meter 21, 22, 23, the user device 3, the control server 4 and the utilities provider 5 is encoded by means of an generic extensible markup language.

In order to enable a better understanding of the importance of the present invention, the present invention is briefly sketched in combination with its applications in other words as follows:

The general idea of the present invention is based on a Server Utility, i.e. a user or a graphical user interface 44 provided by the control server 4, which is a comprehensive backend that enables Smart Metering and Home Automation from distance. An highly effective load factor on the power grid is possible by using the results of the load balance evaluation performed by the control unit 42 of the control server 4. Therefore, the present invention provides a Multi Utility Multi Module Control And Information system which is an important expansion for existing backend platforms and enables the control and information to the user associated with the consumers 61, 62, 63 or the user device 3.

A Internet web-interface 44 provides access to the control server 4, i.e. the Server Utility. The web-interface is accessible by means of a user device 3, e.g. a computer, a cell-phone or a personal digital assistant, i.e. a PDA. The user device can connect to an Internet via communication protocols like Universal Mobile Telecommunications Systems, i.e. UMTS, Wireless Local Area Network, i.e. WLAN, etc.. By means of a user login, the user can access the Server Utility data stored at the data base 43 comprising user specific data, e.g. consumer profile data, consumer energy information and/or consumer tariff data associated with the user. After the login, preferably upon a successful authentication, the user gets a menu navigation displayed on the display of the user device 3 to select one service of the Multi Utility Multi Module Control And Information system.

For example, these services could be viewing consumption charts, activation of several appliances of consumers 61, 62, 63 or Home Automation devices associated with the user. It is possible that the user device 3 is a Home Automation device. The control server 4 provides a Load Management for Home Appliances, i.e. the consumers 61, 62, 63 or Home Automation devices.

The Multi Utility Multi Module Information And Control system is not only considered to be used by the users to control their associated consumers 61, 62, 63, but also by other institutions. These institutions could be for example further energy suppliers, which use it for billing, manufacturers of appliances, which use it to maintain the consumers 61, 62, 63, or to detect defects of the consumers 61, 62, 63, or the emergency institutions, which use it in case of emergency incidents . It has to be understood that the user device 3 can also be the consumer 61, 62, or 63.

Figure 1 shows the general idea of the Multi Utility Multi Module Information and Control system. A Internet web-interface for the Server Utility offers the user associated with the consumers 61, 62, and/or 63 and the user device 3, but also other institutions, several services access to control the consumers 61, 62, and/or 63 and/or the user device 3 and to gather information about the consumers 61, 62, and/or 63 and/or the user device 3 .

As shown in figure 1, the communication between user and Server Utility, i.e. the control server 4, can be enabled via Internet. In urgent cases the control server 4 sends, e.g. via an e-mail service and/or Short Message Service, i.e. SMS, to the user to avoid for instance water, fire damages or burglary. This possibility offers several advantages:

A high availability, because nowadays the Internet is available nearly everywhere.

A platform independence because the access to the control server 4 is possible with various computer systems and most mobile phones, smart phones or personal digital assistants, i.e. PDAs, and because of the usage of standardized transfer protocol above a hypertext transfer protocol, i.e. HTTP, a simple object access protocol, i.e. SOAP, or an IP-packed based communication protocol, preferably in combination with an extensible markup language, i.e. XML, or a smart-metering markup language, i.e. SML.

A user or customer friendly graphical user interface 44 is provided by the control server 4.

For the user a simple graphical user interface is necessary to control the Home Automation the Load Management and to get the information from Smart Metering, i.e. the smart-meters 21, 22 and/or 23, by means of the control server 4. Preferably, the user defines login name and login password to securely access the control server 4 with the data base 43 via the graphical user interface 44. It is possible that the user gets information after his login about the Smart Metering Data, i.e. the consumer energy data, and the consumer energy information associated with the user and the respective consumers 61, 62 and/or 63.

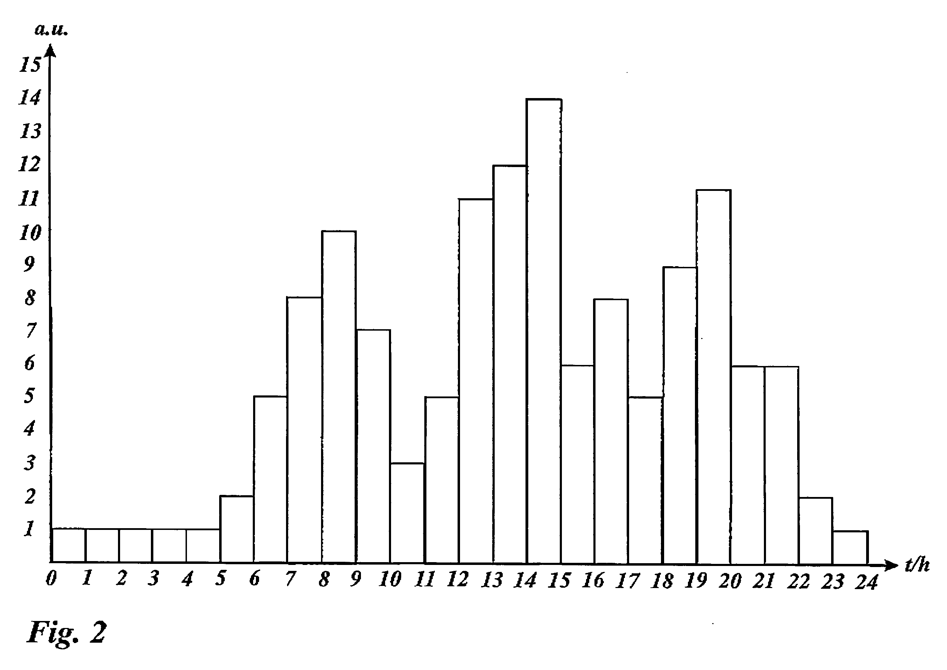

Figure 2 shows a typical consumption chart of a consumer 61, 62 or 63 associated with the user for one day. The consumption chart of Figure 2 shows as histogram in steps of one hour and the energy consumption measured in arbitrary units. This consumption chart can be displayed on a display of the user device 3.

If the Server Utility, i.e. the control server 4, provides further data by means of a more detailed charts, it is possible to provide a chart for one hour. If the Home Automation system collects data about the consumption of single appliances or consumers 61, 62 or 63 similar consumption charts like this of Figure 2 can be used.

The user has the possibility to read the current consumer tariff at an electricity meter on the display. Preferably, the graphical user interface shows the current consumer tariff on the display of the user device 3 to the user after the login

It is possible, that some consumers 61, 62 and/or 63 do not only consume, but also generate energy. The energy production of consumers of private households can be subsidized by the government. Therefore, in case that the consumers 61, 62 and/or 63 generate energy, energy generation charts can be displayed by means of the graphical user interface 43 and these energy generation charts can be provided by the control server 4 as part of the consumer energy information.

Aspects of the Load Management based on the results of the load balancing evaluation performed by the control unit 42 of the control server 4 are described as follows:

The activation of appliances, i.e. consumers 61, 62, 63 or the user device 3, can be controlled via the Internet web-interface by means of the graphical user interface 44. The Internet web-interface can provide a schedule to plan the activation of appliances at a future time. This is of particular interest to users if staying away from home for a long period of time, or in cases where there is variable consumer tariff or a scale of consumer tariffs. The user can schedule energy demands and therefore has the opportunity of saving by means of accessing the control server via the graphical user interface 44.

Load Management is applicable for nearly every kind of appliance, i.e. consumer 61, 62, and/or 63 and/or user device 3 which are for instance:

Heating, ventilation, Air Condition, i.e. HVAC: For example, if the control server 4 receives information about the current temperature, the control server 4 can control the HVAC to hold a constant temperature.

Alarm systems: For instance, the control server 4 receives information about open windows etc.. The control server 4 sends an alarm message to the user in case of such an emergency, for instance by means of an e-mail message. The alarm system does not only include protection against burglary, but e.g. water or smoke sensors as well.

Central lock: For example, by means of the graphical user interface 44 provided by the control server 4, the user can check whether all his doors are locked and lock them via the user device 3 if this is not the case.

Malfunction detection: It is possible that the control server 4 automatically provides a report or information about the malfunction of an appliance via an e-mail send to the user device 3 associated with the user and the respective consumer 61, 62, or 63, i.e. the appliance,

Furthermore, several other institutions can access the control server 4. The utilities provider 5 must receive the information about the energy consumption for billing the respective user. The control server 4 offers a extensible markup language interface, i.e. XML - interface, to transfer the respective data to the utilities provider 5. However, billing is not the only case in which the data transfer to a third party is useful and suggestive. Some other possible cases are:

An emergency call requires to be directed to an emergency center, e.g. a police, a fire brigade, or an emergency doctor.

Information about a malfunction of an appliance, i.e. a consumer 61, 62 or 63, requires to be send to a manufacturers.

Information about a fill level of a tank, in particular a storage tank, at the users home requires an automatic information send to a suppliers of oil or gas.

The functionality of Load Management of the control server 4 also means the activation of not urgent appliances, i.e. consumers 61, 62, and/or 63, if there is an energy excess in the power grid. For instance, wind turbines or solar plants cannot be controlled with regard to energy generation, since wind or sun cannot be controlled yet. In order to enhance the attractiveness of Load Management the energy is cheaper in case of high generation or if there is more generation than consumption. By means of the Multi Utility Multi Module Information And Control system the user has the possibility to define by means of the graphical user interface jobs, i.e. the controlling of his consumers 61, 62, 63 and/or user device 3, as not urgent. Preferably, the user assigns priorities to his consumers 61, 62, 63 as indicated in the following table:

**Table: Tariff table, referred to a priority level**

| Priority | Space of time | Charge in €/kWh |
|---|---|---|
| 1 | Within 2 hours | 0,14 |
| 2 | Within 4 hours | 0,12 |
| 3 | Within 8 hours | 0,08 |
| 4 | Within a day | 0,06 |
| 5 | Within a week | 0,04 |

For instance, the user associated with the user device 3 and/or the consumer 61, 62 and/or 63 can adapt the priority of the user device 3 and/or the consumer 61, 62 and/or 63 in the first column of the above table via the graphical user interface. Furthermore, the user can adapt the space of time associated with the priority, wherein the space of time is a time interval in which the control server 4 triggers remotely the start of the user device 3 and/or the consumer 61, 62 and/or 63, However, it is also possible that the space of time cannot be adapted or configured by the user. In this case the space of time is predetermined. The last column of the above table displays the charge in €/kWh, i.e. the consumer tariff, predetermined by the control server 4 or the utilities provider 5. It is possible that in case that the user adapts the space of time, the control server 4 or the utilities provider 5 update the consumer tariff, i.e. the third column of the above table and preferably the control server 4 sends a respective energy consumer information to the user.

Therefore, the present invention provides user-friendly or customer-friendly possibility to access Smart Metering, Home Automation and Load Management by means of the graphical user interface 44 provided by the control server 4. Furthermore, the present invention is an economy-priced solution, because there is already an existing Internet web-access for Smart Metering via the backend platform of the utilities provider 5 and by means of enhancing an extensible markup language protocol for exchanging data between the smart-meters 21, 22 and 23, the user device 3, the control server 4 and the utilities provider 5.

## Claims

1. Method of controlling a power grid, wherein the method comprises the steps of:
receiving, by a control server (4), information about utilities energy data from a utilities provider (5),
receiving, by the control server (4), information about consumer energy data from a plurality of smart-meters (21, 22),
performing, by the control server (4), a load balancing evaluation based on the received information about utilities energy data and on the received information about consumer energy data,
generating, by the control server (4), consumer energy information based on results of the load balancing evaluation and on energy management data associated with a respective consumer (61, 62) and extracted from a data base (43), and
sending, by the control server (4), the generated consumer energy information to a user device (3) and/or a smart-meter (21, 22), wherein the user device (3) is associated with the smart-meter (21, 22).

2. The method of controlling a power grid according to claim 1,
wherein the step of performing the load balancing evaluation comprises the step of :
updating, by the control server (4), the data base (43) comprising a consumption chart, preferably for the consumer (61, 62) associated with the smart-meter (21, 22) and/or the smart-meter (21, 22), a utilities
provider energy production chart, a utilities provider energy distribution chart, and a consumer tariff chart according to the received consumer energy data and received utilities energy data.

3. The method of controlling a power grid according to claim 1, wherein the method comprises the step of:
generating as consumer energy information an updated consumer tariff chart and/or consumer tariff information, which offers to a user associated with the respective consumer (61, 62) a low tariff for periods with high energy excess in the power grid associated with the utilities provider (5) and a high tariff for periods with energy shortage in the power grid, based on data of the data base (43).

4. The method of controlling a power grid according to claim 1, wherein the method comprises the steps of:
providing, by the control server (4), a graphical user interface (44), preferably accessible by means of an Internet web-browser, accessing the control server (4), preferably upon successful authentication, by means of the graphical user interface (44) via the user device (3), which is preferably a personal computer, a personal digital assistant or a smart phone, providing consumer energy information via the graphical user interface (44), and
creating, deleting or modifying of consumer profile data associated with the respective consumer (61, 62) held in the data base (43) via the graphical user interface (44).

5. The method of controlling a power grid according to claim 1, wherein the method comprises the steps of:
receiving, by the smart-meter (21, 22), the generated consumer energy information,
extracting, by the smart-meter (21, 22), from the consumer energy information schedule instructions and/or control instructions assigned to the respective consumer (61, 62) with time information and priority information, and
controlling the consumer (61, 62) according to the extracted schedule instructions and/or control instructions.

6. The method of controlling a power grid according to claim 1, wherein the method comprises the steps of:
generating, by the control server (4), utilities provider information based on the results of the load balancing evaluation and/or on the extracted energy management data, preferably comprising consumption chart and/or schedule information associated with a consumer (61, 62)
associated with the smart-meter (21, 22) and/or with the smart-meter (21, 22),
sending, by the control server (4), the generated utilities provider information to the utilities provider (5),
receiving, by the utilities provider (5), the generated utilities provider information, and
adapting, by the utilities provider (5), an amount of energy provided on schedule and routed on schedule through the power grid to consumers (61, 62) according to the received utilities provider information.

7. The method of controlling a power grid according to claim 1, wherein the method comprises the steps of:
receiving, by the control server (4), an alert message indicating an supply shortage, an emergency call, and/or a malfunction of an appliance from a smart-meter (21, 22), and
forwarding, by the control server (4), the alert message to an supplier, an emergency center, and/or maintenance provider or manufacturer of the appliance, respectively.

8. The method of controlling a power grid according to claim 1,
wherein the utilities energy data is received periodically, preferably every 10 minutes to 20 minutes, and utilities energy data comprises an amount of energy presently produced and/or available, energy pricing information, energy transport information, and/or wherein the consumer energy data is received periodically, preferably every 10 minutes to 20 minutes, and the consumer energy data comprises an amount of energy presently produced and/or consumed by a consumer (61, 62) assigned to the smart-meter (21, 22).

9. The method of controlling a power grid according to claim 1,
wherein the information send from, received by and/or exchanged between the control server (4), the utilities provider (5), the smart-meter (21, 22), and/or the user device (3) is encoded by means of a generic protocol, preferably an extensible markup language above an hypertext transfer protocol.

10. A control server (4) comprises communication means (41), a data base (43) and a control unit (42) adapted to:
receive information about utilities energy data from a utilities provider (5), receive information about consumer energy data from a plurality of smart-meters (21, 22),
perform a load balancing evaluation based on the received information about utilities energy data and on the received information about consumer energy data,
generate consumer energy information based on results of the load balancing evaluation and on energy management data associated with a respective consumer (61, 62) and extracted from a data base (43), and send the generated consumer energy information to a user device (3) and/or a smart-meter (21, 22), wherein the user device (3) is associated with the smart-meter (21, 22).
